# FASCICULE DE BREVET EUROPEEN

(11) **EP 3 241 202 B1**
(45) Date de publication et mention de la délivrance du brevet: **06.05.2020**
(21) Numéro de dépôt: 15823725.5
(22) Date de dépôt: 30.12.2015
(51) Int. Cl.: G08C 17/02

(54) **PROCÉDÉ D'ASSOCIATION D'UN OBJET AVEC UN UTILISATEUR, DISPOSITIF, OBJET ET PRODUIT PROGRAMME D'ORDINATEUR CORRESPONDANT**
VERFAHREN ZUR ZUORDNUNG EINES OBJEKTS MIT EINEM BENUTZER, VORRICHTUNG, OBJEKT UND ZUGEHÖRIGES COMPUTERPROGRAMMPRODUKT
METHOD FOR ASSOCIATING AN OBJECT WITH A USER; DEVICE; OBJECT; AND CORRESPONDING COMPUTER PROGRAM PRODUCT

(30) Priorité: 31.12.2014 FR 1463503
(43) Date de publication de la demande: 08.11.2017
(73) Titulaire: SIGFOX, 31670 Labège (FR)
(72) Inventeur: LE MOAN, Ludovic, 31860 Pin Justaret (FR)
(74) Mandataire: Ipside
(86) Numéro de dépôt international: PCT/FR2015/053774
(87) Numéro de publication internationale: WO 2016/108032

(56) Documents cités:
- US-A1- 2008 287 062
- US-A1- 2014 082 707
- US-A1- 2014 259 116
- US-B1- 8 370 168

## Description

### Domaine technique

La présente invention se rattache au domaine des communications avec des objets dits communicants ou connectés, et se rapporte plus précisément à un procédé d'association d'un tel objet avec un utilisateur.

### Etat de la technique antérieure

Un objet communicant ou connecté est équipé de moyens de communication, généralement sans fil, lui permettant d'échanger des données avec par exemple d'autres objets connectés, une centrale de commande dédiée ou encore un terminal utilisateur tel qu'un ordinateur, une tablette ou un smartphone. Il peut s'agir par exemple d'objets grand public comme un téléviseur, une lampe, un détecteur de fumée, tous équipés de moyens de communication sans fil, ou encore d'objets conçus pour le secteur industriel comme des capteurs ou des dispositifs de contrôle, tous également équipés de moyens de communication adaptés.

Tous ces objets sont généralement susceptibles d'envoyer et de recevoir des informations sur leur état, en temps réel ou non, ou d'être sollicités pour effectuer diverses actions. Par exemple, pour un usage en domotique, il est possible de commander à distance l'ouverture ou la fermeture de volets, de régler le chauffage en fonction de la température désirée dans une pièce, d'allumer ou d'éteindre des lampes, de mesurer la quantité d'énergie électrique consommée, de détecter la présence de fumée ou d'individu dans une pièce et de communiquer ces informations à un terminal ou à une centrale de commande.

Généralement, la mise en œuvre préalable d'un procédé d'association (appelé communément « appairage ») permet d'associer le terminal avec des objets avec lesquels il est autorisé à communiquer, de manière à indiquer au terminal, respectivement aux objets, avec quel objet, respectivement terminal, il est autorisé à communiquer. Conventionnellement, le protocole d'association est défini par le fabriquant de l'objet connecté ou par l'une des normes de communication radio existante (Bluetooth, Wi-Fi, etc.). Par exemple, le procédé d'association peut impliquer l'échange d'un code d'association entre les dispositifs à associer ou l'apprentissage par chaque dispositif d'un identifiant du dispositif avec lequel il est autorisé à communiquer.

Au vu de la diversité des normes de communication et du nombre grandissant de fabricants d'objets connectés, pour associer plusieurs objets à un terminal, il est donc nécessaire de s'assurer que le terminal est équipé des différents moyens de communication radio appropriés pour dialoguer avec chacun de ces objets, et des différentes applications dédiées pour le contrôle de chacun de ces objets.

Par ailleurs, certaines procédures d'association peuvent s'avérer fastidieuses dans la mesure où l'utilisateur doit parfois saisir plusieurs fois un code formé d'une longue série de chiffres et/ou de lettres. En outre, certains protocoles d'association nécessitent des manipulations sur l'objet même. Par exemple, il est parfois nécessaire d'appuyer sur un bouton de l'objet selon une séquence particulière. Or dans certains cas, l'objet peut être localisé dans un endroit difficile d'accès, voire inaccessible à l'utilisateur, rendant l'appairage compliqué ou impossible.

L'utilisation d'une centrale de commande permet une association automatique avec les objets connectés d'un même fabriquant. Cette solution présente cependant certains inconvénients puisque la diversité ainsi que le nombre des objets pouvant être appariés à la centrale de commande sont limités. Par ailleurs, la distance maximale autorisée entre chaque objet et la centrale de commande est parfois limitée à une dizaine ou centaine de mètres.

Voir aussi la publication US 8,370,168 qui décrit un procédé d'association d'un objet à un utilisateur après vérification par un serveur central que l'utilisateur est bien le possesseur de l'objet.

### Exposé de l'invention

La présente invention se propose donc de pallier les inconvénients exposés ci-avant en proposant notamment une solution différente dans laquelle l'objet n'est plus associé à un dispositif spécifique, mais à un utilisateur. En particulier, la présente invention propose une solution pour associer un utilisateur avec un objet communicant, qui ne nécessite pas des étapes de manipulation ou de configuration complexes de la part de l'utilisateur. Par ailleurs, l'invention a également pour but de proposer une solution qui permette d'élargir la portée des communications entre un terminal de l'utilisateur et l'objet communicant, et qui ne limite ni le nombre d'objets connectés pouvant être associés à un utilisateur, ni le nombre d'utilisateurs pouvant être associés à un objet connecté.

A cette fin, la présente invention a pour objet un procédé d'association entre un objet communicant et au moins un utilisateur. Ce procédé d'association comprend notamment :
- la réception par un serveur distant d'un signal de requête d'association entre un identifiant de l'utilisateur dit « identifiant utilisateur » et un identifiant de l'objet dit « identifiant objet » ;
- la vérification par le serveur d'une autorisation d'association entre l'identifiant objet et l'identifiant utilisateur ;
- si l'association est autorisée, l'association de l'identifiant objet avec l'identifiant utilisateur dans une base de données accessible par le serveur distant, cette base de données comprenant au moins une liste d'identifiants utilisateur et une liste d'identifiants objet.

Ainsi, le procédé d'association de l'invention est réalisé par un serveur distant ayant accès à une base de données dans laquelle des identifiants utilisateur et des identifiants objet sont mémorisés. En particulier, le serveur distant s'assure au préalable que l'association est autorisée, et associe dans la base de données, l'identifiant objet à l'identifiant utilisateur, notamment par la mise en jour de la base de données. Bien entendu, en fonction des requêtes d'association et des autorisations d'association, un identifiant objet mémorisé dans la base de données peut donc être associé à aucun, un ou plusieurs identifiant(s) utilisateur(s) mémorisé(s) dans cette base de données.

On comprend donc qu'une association réussie se traduit par l'association dans la base de données, d'un identifiant objet enregistré dans cette base de données avec un identifiant utilisateur également enregistré dans cette base de données. Cette association définit une relation entre l'objet et l'utilisateur qui autorise l'objet à communiquer uniquement avec l'utilisateur auquel il est associé, de façon directe ou par l'intermédiaire du serveur. En pratique, lorsque le serveur sert d'intermédiaire entre l'objet et l'utilisateur, l'association indique au serveur ayant reçu des messages de l'objet, à quel(s) utilisateur(s) ces messages doivent être relayés, et le(s) utilisateur(s) associé(s) à cet objet peut (peuvent) communiquer avec cet objet par l'intermédiaire du serveur.

Ainsi, contrairement à l'art antérieur où l'objet est associé à un dispositif bien précis, le procédé d'association proposé par la présente invention permet d'associer un objet avec un utilisateur ou un compte utilisateur, via un identifiant utilisateur. En d'autres termes, l'objet n'est plus associé à un terminal utilisateur ou une centrale de commande spécifique, mais à un utilisateur via son identifiant utilisateur. L'utilisateur peut ainsi utiliser différents terminaux pour communiquer avec l'objet, sans qu'il soit nécessaire de procéder au préalable à l'association de l'objet avec chacun de ces terminaux. Par ailleurs, contrairement à l'art antérieur où l'association est généralement réalisée de manière directe entre un objet et un terminal utilisateur ou une centrale de commande dédiée, le procédé d'association proposé par la présente invention fait intervenir un serveur distant ayant accès à une base de données. Le serveur distant qui peut être affilié à au moins un réseau de communication sans fil comprend bien entendu toutes les ressources nécessaires pour assurer une communication à la fois avec le terminal utilisateur et l'objet communicant. Le serveur réalise notamment toutes les vérifications nécessaires pour éviter toute requête d'association malveillante, et tient à jour une table d'association contenant la liste des associations entre les identifiants objet et les identifiants utilisateur. L'association entre un objet communicant et un utilisateur, ou plus précisément entre un identifiant objet et un identifiant utilisateur ou un compte utilisateur, est donc réalisée par le serveur de manière quasi transparente pour l'utilisateur. En effet, il suffit à l'utilisateur d'envoyer au serveur, via un terminal par exemple, un signal de requête d'association contenant notamment l'identifiant objet et l'identifiant utilisateur à associer avec cet identifiant objet.

Cette solution présente notamment l'avantage de permettre une association centralisée simple mais sécurisée entre plusieurs identifiants utilisateur et plusieurs identifiants objet de différents types, pouvant par exemple provenir de constructeurs différents, et pouvant par exemple être destinés à des applications différentes. Par exemple, le même serveur peut être utilisé pour associer un même identifiant utilisateur à différents objets communicants mobiles ou non. En outre, l'utilisateur, ou plus exactement le terminal avec lequel l'utilisateur communique, et les objets associés à cet utilisateur peuvent être répartis dans des zones géographiques différentes, par exemple distant de plusieurs kilomètres entre eux. La distance entre les objets communicants et l'utilisateur n'est donc plus un critère limitatif.

En outre, il n'est plus nécessaire d'attribuer des ressources importantes dans le terminal utilisateur et/ou dans les objets communicants, puisque la grande majorité des tâches gourmandes en ressources, telles que le procédé d'association et la gestion des communications entre terminal et objets, peuvent être mises en œuvre par le serveur.

En pratique, pour écarter toute requête d'association malveillante, la vérification par le serveur d'une autorisation d'association peut comprendre :
- la vérification d'une association préexistante ou non de l'identifiant objet avec au moins un autre identifiant utilisateur ; et
- si le résultat de la vérification d'une association préexistante est positif, l'envoi par le serveur d'un signal de requête d'autorisation d'association à destination d'un terminal associé audit autre identifiant utilisateur.

Dans ce cas, l'association de l'identifiant utilisateur avec l'identifiant objet est autorisée si le résultat de la vérification d'association préexistante est négatif ou à réception d'un signal d'autorisation consécutif au signal de requête d'autorisation d'association.

Il est également possible, suivant un autre exemple, de ne pas autoriser l'association lorsque le résultat de la vérification d'association préexistante est positif, auquel cas le serveur n'envoie pas de signal de requête d'autorisation d'association et l'association de l'identifiant utilisateur avec l'identifiant objet n'est autorisée que si le résultat de la vérification d'association préexistante est négatif.

Selon une variante, la vérification d'association préexistante peut consister à rechercher dans la base de données si l'identifiant objet est associé à un autre identifiant utilisateur. En d'autres termes, le serveur vérifie dans la base de données si l'objet a déjà été associé avec un autre identifiant utilisateur.

Selon une autre variante, la vérification d'association préexistante peut consister à :
- envoyer un signal de requête d'état à l'objet via un protocole de communication sans fil, ce protocole de communication sans fil pouvant avantageusement être à bas débit (c'est à dire de débit inférieur à 1 kb/s) ; et
- recevoir un signal d'état en provenance de l'objet consécutivement à la requête d'état, ce signal d'état contenant au moins un indicateur d'association préexistante.

En pratique, la requête d'état envoyée par le serveur permet notamment d'une part de savoir si l'objet est actif, c'est-à-dire allumé ou en fonctionnement, et d'autre part de savoir si l'objet a déjà été associé à un autre utilisateur. En particulier, à réception de la requête d'état, l'objet envoie de préférence un signal à destination du serveur distant sous la forme d'une trame contenant un indicateur, par exemple de type drapeau ou « flag » en anglais, indiquant si l'objet a déjà été associé auparavant.

Bien entendu, ce signal d'état peut également contenir d'autres informations comme par exemple l'identifiant de l'autre utilisateur auquel il est déjà associé, ou encore les différentes informations nécessaires au serveur pour communiquer avec cet autre utilisateur, tel que des informations relatives au terminal sur lequel les messages doivent être envoyés. Ceci est notamment utile lorsque cet autre utilisateur n'est pas enregistré dans la base de données à laquelle le serveur peut accéder.

Par ailleurs, la trame peut également contenir d'autres informations utiles au serveur distant pour réaliser l'association, tel que par exemple des critères d'association, le nombre maximal d'utilisateurs pouvant être associés, la durée pendant laquelle une association reste valide, des instructions pour autoriser l'association.

Bien entendu, il est possible de combiner les deux variantes pour renforcer le contrôle des requêtes d'association malveillantes.

En pratique, le procédé peut en outre comprendre l'envoi par le serveur d'un signal d'indication du succès ou de l'échec de l'association requise, à destination d'au moins un terminal de l'utilisateur.

Une fois l'association réussie, le serveur peut envoyer un signal de configuration à destination de l'objet, selon le protocole de communication sans fil bas débit par exemple. Ce signal de configuration peut contenir au moins une commande de mise à jour de l'indicateur d'association, consécutivement à la réussite de l'association requise entre l'identifiant utilisateur et l'identifiant objet.

Avantageusement, un statut utilisateur principal ou secondaire peut être attribué à chaque identifiant utilisateur pour chaque identifiant objet auquel l'identifiant utilisateur est associé dans la base données. De façon générale, le statut d'utilisateur principal confère de préférence au titulaire tous les droits sur l'objet et le statut d'utilisateur secondaire confère de préférence au titulaire tout ou partie des droits sur l'objet.

La requête d'autorisation d'association est de préférence envoyée à l'autre utilisateur, ou plus exactement au terminal dudit autre utilisateur, ayant le statut d'utilisateur principal.

Par exemple, selon une variante, un nouvel utilisateur peut requérir l'association de son identifiant utilisateur avec celui de l'identifiant objet déjà associé à un identifiant utilisateur ayant le statut d'utilisateur principal. Dans ce cas, l'utilisateur principal peut, simultanément à l'envoi de l'autorisation d'association, attribuer le statut d'utilisateur secondaire au nouvel utilisateur et définir l'étendue des droits du nouvel utilisateur sur l'objet en question.

Selon une autre variante, plusieurs identifiants utilisateur peuvent être regroupés sous un compte utilisateur dans la base de données pour former un groupe d'utilisateurs. Dans cette variante, les identifiants objet de la base de données sont associés à des comptes utilisateur ou groupes d'utilisateurs. En outre, dans un groupe d'utilisateurs, l'utilisateur ayant le statut d'utilisateur principal peut définir les statuts et droits des autres utilisateurs du groupe sur chacun des objets associés à ce compte utilisateur.

Selon une autre variante, le système, et en particulier le serveur, peut être configuré pour qu'en l'absence de réponse de l'utilisateur principal, un utilisateur secondaire soit désigné utilisateur principal suppléant.

Ainsi, quelle que soit la variante mise en œuvre, la base de données peut donc contenir, outre les identifiants objet et utilisateur, d'autres données relatives à chaque utilisateur pour chacun des objets auquel l'utilisateur est associé, comme par exemple, le mode de fonctionnement de l'objet, le type d'objet, les droits, la durée de validité des droits, les préférences de chaque utilisateur, telles que les périodicité d'alerte, l'adresse IP (« Internet Protocol ») ou tout autre information relative au terminal sur lequel les informations doivent être envoyées.

Avantageusement, le serveur distant assure la communication entre l'objet et au moins un terminal utilisateur référencé dans la base de données pour l'identifiant utilisateur auquel cet objet est associé. En d'autres termes, chaque objet connecté communique avec l'utilisateur auquel il est associé par l'intermédiaire du serveur distant. En pratique, il est avantageux que le serveur distant assure l'ensemble des communications entre l'objet et l'utilisateur auquel l'objet est associé. Il est cependant possible de prévoir une communication directe entre l'objet et le terminal utilisateur une fois l'association réalisée.

En pratique, l'objet envoie des messages à destination du serveur ou du terminal via un premier protocole de communication sans fil, et le terminal utilisateur envoie des messages à destination du serveur via un deuxième protocole de communication. Ce deuxième protocole de communication peut être identique au premier protocole de communication mais peut également être différent. Par ailleurs, l'utilisateur peut utiliser un premier terminal pour envoyer la requête d'association au serveur, puis utiliser un deuxième terminal pour communiquer avec le serveur après l'association, via un troisième protocole de communication différent ou identique des premier et deuxième protocoles de communication.

De préférence, le serveur reçoit les messages en provenance de l'objet via au moins une station de base connectée à la fois à l'objet par l'intermédiaire d'un premier réseau de communication et au serveur par l'intermédiaire d'un deuxième réseau de communication.

L'invention a également pour objet un système de communication comprenant :
- un objet communicant intégrant un module de communication selon un premier protocole de communication, ledit objet étant identifié par un identifiant objet unique;
- un terminal utilisateur couplé à un module de communication selon un deuxième protocole de communication ; et
- un serveur distant ayant accès à une base de données, tels que définis ci-avant, et couplé à des moyens adaptés pour communiquer avec l'objet et le terminal.

En pratique, le premier protocole de communication est de préférence compatible avec une technologie radio de bande ultra-étroite, autorisant des communications sans fil bas débit à longue portée, avec une portée de plusieurs dizaines de kilomètres par exemple. Par « bande ultra-étroite », on entend que la largeur du spectre fréquentiel des signaux émis avec une telle technologie radio est inférieure à deux kilohertz, voire inférieure à un kilohertz.

Une telle technologie radio de bande ultra-étroite est plus connue sous l'acronyme UNB pour « Ultra-Narrow Band » et utilise notamment les bandes de fréquences libres de droits (c'est-à-dire qui ne nécessite pas une demande d'autorisation préalable auprès des autorités) pour transmettre sur un spectre très étroit des données destinées ou en provenance d'appareils connectés. Elle permet notamment des communications radio sans fil bas débit (typiquement de l'ordre de 10b/s à 1 kb/s) sur de longues distances (notamment 35 jusqu'à 40km en champ libre), et est notamment bien adaptée pour la réalisation de réseau de communication bas débit de type Machine-to-Machine (M2M) ou de type « Internet des objets ». Un exemple de système de communication mettant en œuvre une telle technologie UNB est notamment décrit dans la demande de brevet internationale publiée sous le numéro WO 2013/068559.

De ce fait, l'objet est donc de préférence intégré dans un premier réseau de communication conforme à cette technologie de communication sans fil bas débit à longue portée, dite Ultra Narrow Band.

Par ailleurs, le terminal utilisateur peut être tout appareil couplé à des moyens matériel et/ou logiciel pour communiquer avec le serveur distant selon au moins un protocole de communication. Un tel terminal peut être fixe ou mobile, et peut par exemple se présenter sous la forme d'une station mobile, d'un ordinateur, d'un téléphone mobile, d'un smartphone, d'une tablette, d'une carte, etc. Les moyens matériel et/ou logiciel peuvent être intégrés directement dans le terminal ou peuvent être des modules externes connectés au terminal, via par exemple une connexion conforme à la norme USB (acronyme anglosaxon pour « Universal Serial Bus »). Par exemple, ces moyens matériel et/ou logiciel peuvent se présenter sous la forme d'une clé matérielle (communément dénommée « dongle ») formée de circuits intégrés couplés à une antenne radio compatible avec l'une des technologies de radiocommunication sans fil. Ces moyens matériel et/ou logiciel peuvent également être une carte réseau compatible avec l'une des technologies de communication existantes. Par exemple, le terminal utilisateur communique avec le serveur distant selon un protocole de communication compatible avec l'une des normes de radiocommunication existantes, qui peut être sans fil ou filaire, telle que par exemple Ethernet, les normes de groupe IEEE 802.11 (Wi-Fi), IEEE 802.15 (Bluetooth, ZigBee), IEEE 802.16 (WiMAX), RFID, CPL, NFC (technologie de communication en champ proche), ou encore compatible avec ladite technologie de communication bas débit à longue portée, de type UNB.

De ce fait, le terminal peut être affilié à un deuxième réseau de communication distinct du premier réseau de communication.

De préférence, les communications entre les objets et le serveur, ou entre les terminaux utilisateur et le serveur, passent de préférence par au moins une station de base d'un réseau de communication sans fil bas débit auquel le serveur est affilié.

L'invention a également pour objet un dispositif d'association comprenant un serveur distant ayant accès à une base de données, ladite base de données comprenant au moins une liste d'identifiants utilisateur et une liste d'identifiants objet. Le serveur est apte à communiquer avec au moins un objet distant selon un protocole de communication et avec au moins un terminal distant. Le serveur est en outre apte à mettre en œuvre le procédé d'association défini ci-dessus. Le protocole de communication entre le serveur et l'objet pouvant être, sans que ce soit limitatif, un protocole de communication sans fil bas débit, par exemple compatible avec une technologie radio UNB.

L'invention concerne également un objet communicant identifié par un identifiant objet unique, comprenant :
- des moyens de communication selon un protocole de communication sans fil bas débit ;
- des moyens pour répondre à tout ou partie des requêtes du procédé d'association décrit ci-dessus.

Un terminal utilisateur adapté peut notamment comprendre :
- des moyens pour récupérer un identifiant d'un objet dit « identifiant objet » ;
- des moyens pour l'envoi d'une requête d'association dudit identifiant objet avec un identifiant de l'utilisateur dit « identifiant utilisateur » à un serveur distant ;
- des moyens pour répondre à tout ou partie des requêtes du procédé d'association décrit ci-dessus.

L'invention concerne également un produit programme d'ordinateur téléchargeable depuis un réseau de communication et/ou enregistré sur un support lisible par ordinateur et/ou exécutable par un processeur, comprenant des instructions de code de programme pour la mise en œuvre de tout ou partie du procédé d'association décrit ci-dessus.

### Brève description des dessins

D'autres caractéristiques et avantages de l'invention ressortiront clairement de la description qui en est faite ci-après, à titre indicatif et nullement limitatif, en référence aux dessins annexés, dans lesquels :
- la figure 1 est une représentation schématique d'un système de communication mettant en œuvre un procédé d'appairage selon un mode de réalisation de l'invention ; et
- la figure 2 représente, à titre illustratif, un organigramme du procédé d'appairage de mise en œuvre par le système de communication illustré à la figure 1.

### Exposé détaillé d'un mode de réalisation particulier

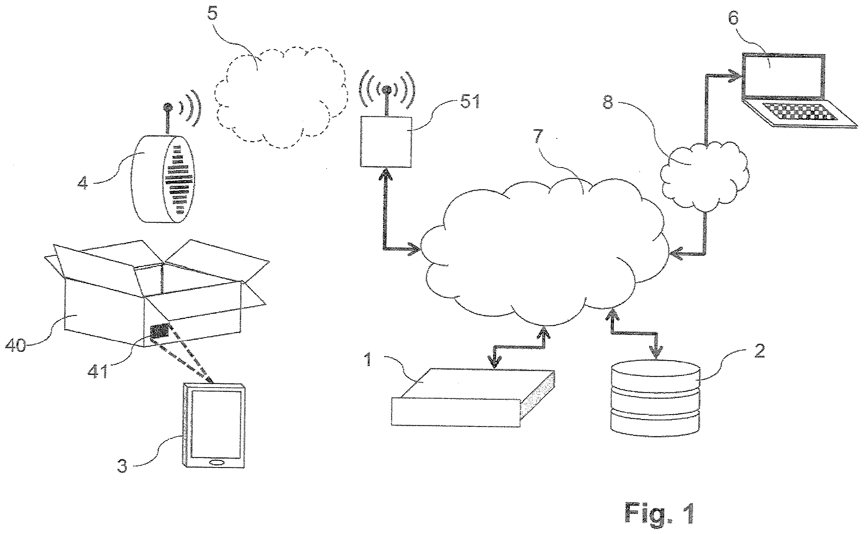

En référence à la figure 1, un système de communication adapté pour la réalisation de l'appairage selon un mode de réalisation particulier comprend notamment :
- un serveur 1 distant ayant accès à une base de données 2 ;
- un premier terminal 3 utilisateur ; et
- un objet 4 communicant.

Dans ce mode de réalisation particulier, le serveur 1 distant est notamment affilié, c'est à dire connecté via un réseau de communication global 7, à un premier réseau de communication 5. Ce premier réseau de communication est de préférence de type sans fil et de préférence de type bas débit, par exemple compatible avec la technologie radio UNB. En pratique, les messages envoyés par le serveur à destination du premier réseau 5 sont relayés par une station de base 51 connectée à la fois au réseau global 7, par exemple de type internet ou de type GSM, et au premier réseau 5. De ce fait, le serveur 1 et la station de base 51 comprennent donc tous les moyens matériel et logiciel pour communiquer via le ou le(s) réseau(x) auxquels ils sont connectés.

Par ailleurs, l'objet 4 communicant et le premier terminal 3 utilisateur, par exemple un smartphone ou encore une tablette ou un ordinateur, sont également équipés de moyens matériel et logiciel, pour se connecter au premier réseau 5 et communiquer via ce premier protocole de communication.

Les objets communicants concernés dans ce cas particulier sont du type de ceux qui permettent de former ce que l'on appelle « l'Internet des Objets » (ou « Internet of Things » en anglais), à savoir un réseau physique connecté d'objets portant un certain nombre d'informations et capables de les communiquer. De tels objets communicants correspondent à une grande diversité de dispositifs, tels que par exemple des implants cardiaques, des transpondeurs biocompatibles, des véhicules automobiles embarquant des capteurs divers, des dispositifs de collecte d'informations comme par exemple des compteurs de consommation d'eau ou d'électricité, des détecteurs de fumées, des actuateurs pilotant des dispositifs divers tels que l'éclairage urbain ou l'ouverture d'un portail, des thermostats connectés, des laves linge pilotables à distance, etc.

Ainsi, un objet communicant peut être un objet doté de moyens pour interagir avec son environnement, sous la forme de capteurs et/ou d'actionneurs par exemple, et de moyens pour échanger des informations avec des terminaux ou d'autres objets communicants, sous la forme de module de communication typiquement sans fil. Par exemple, un tel objet communicant peut être capable :
- d'acquérir des informations relatives à son état propre ou à son environnement via des capteurs par exemple,
- de traiter et stocker des informations,
- d'échanger des informations avec un terminal ou tout autre objet communicant par l'intermédiaire de module de communication typiquement sans fil, par exemple pour envoyer les information acquises ou pour recevoir des ordres commandes,
- de réaliser des actions sur son état propre ou sur l'environnement par l'intermédiaire d'actionneurs par exemple.

Typiquement, l'objet 4 communicant est identifié par un identifiant objet, qui peut être contenu dans un code 41 tel qu'un code barre, un code en deux dimensions du type « flashcode » ou « QR code », ou encore d'un code alphanumérique. Par exemple, cet identifiant objet peut être apposé par le constructeur directement sur l'objet 4 ou imprimé sur l'emballage 40 de l'objet ou dans une notice d'utilisation. Bien entendu, le code 41 contenant l'identifiant objet peut également contenir d'autres informations relatives à l'objet.

De même chaque utilisateur est identifié par le serveur 1 par un identifiant utilisateur, par exemple sous la forme d'un login couplé à un mot de passe. Par ailleurs, plusieurs utilisateurs peuvent être regroupés sous un même compte utilisateur.

La base de données 2 accessible par le serveur 1, soit directement soit via le réseau global 7, comprend notamment une liste d'identifiants utilisateur préalablement enregistrés et éventuellement une liste d'identifiants objet préalablement enregistrés. Par ailleurs, la base de données 2 peut également être enrichie d'informations complémentaires relatives à chaque identifiant utilisateur et/ou chaque identifiant objet telles que par exemple le type d'objet, la date d'acquisition de l'objet, des informations concernant la garantie, ou encore les préférences d'utilisation pour chacun des utilisateurs comme par exemple l'adresse IP à laquelle les messages doivent être envoyé, l'adresse électronique, le numéro de téléphone, etc. Parmi ces informations complémentaires, on peut également citer le statut de l'utilisateur pour chacun des objets auquel il est associé. Par exemple, un statut utilisateur principal ou secondaire peut être attribué à chaque identifiant utilisateur pour chaque identifiant objet auquel cet identifiant utilisateur est associé dans la base données. Généralement, le statut d'utilisateur principal confère au titulaire tous les droits sur l'objet et le statut d'utilisateur secondaire confère au titulaire tout ou partie des droits sur l'objet.

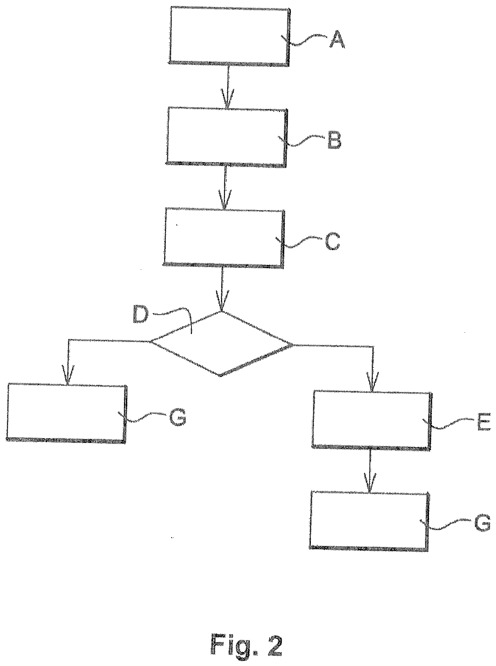

La figure 2 présente un organigramme sommaire des principales étapes mises en œuvre lors de l'appairage d'un identifiant objet avec un identifiant utilisateur, adapté pour le système de communication de la figure 1.

Dans un premier temps, l'utilisateur récupère (étape A) l'identifiant objet de l'objet, par exemple manuellement ou de manière automatique via le premier terminal 3 utilisateur. Par exemple, le terminal 3 peut être équipé d'un lecteur de flashcode.

L'utilisateur envoie (étape B) ensuite, via le premier terminal 3 utilisateur, une requête d'association au serveur 1. Cette requête d'association se présente notamment sous la forme d'une trame contenant en particulier l'identifiant objet de l'objet et l'identifiant utilisateur à associer avec cet objet. Bien entendu, cette trame peut contenir d'autres informations relatives à l'utilisateur et/ou l'objet telles que celles contenues dans le code barre contenant l'identifiant objet par exemple.

En pratique, l'envoi de cette trame peut être réalisé via une application installée dans le premier terminal 3. Par exemple, l'utilisateur peut entrer manuellement, via une interface de cette application, l'identifiant utilisateur et l'identifiant objet. Dans une variante, l'application peut être conçue de manière à permettre la capture automatique du code contenant l'identifiant objet, par exemple via un lecteur de code barre, et à permettre un envoi automatique de la requête d'appairage au serveur.

A réception par le serveur 1 de la requête d'appairage, le serveur 1 vérifie (étape C) si l'association requise est autorisée dans le but d'écarter toute requête d'association malveillante.

En pratique, le serveur 1 vérifie si l'identifiant objet est déjà associé avec un autre identifiant utilisateur.

Par exemple, le serveur 1 peut vérifier si l'identifiant objet est enregistré dans la base données 2 et si l'identifiant objet est déjà associé à un autre identifiant utilisateur.

Bien entendu, l'identifiant objet peut ne pas être enregistré dans la base de données 2 préalablement à la requête d'appairage. Dans ce cas, l'identifiant objet sera ajouté à la base de données lors de la procédure d'association, et la vérification de l'autorisation d'association peut être obtenue par l'envoi d'un signal de requête d'état à l'objet via le premier protocole de communication. A réception de ce signal de requête d'état, l'objet 4 envoie un signal d'état sous la forme d'une trame contenant notamment un indicateur d'association préexistant. Outre cet indicateur d'association préexistant, la trame peut également contenir d'autres informations, par exemple l'identifiant de l'utilisateur principal de l'objet, le nombre maximal d'utilisateurs pouvant être associés, un indicateur précisant si une nouvelle association est autorisée.

Selon une variante, l'indicateur d'association préexistant peut être directement contenu dans la requête d'association. Par exemple, il est possible d'envisager le cas où l'objet est capable de générer lui-même un code actualisé, par exemple un code barre, contenant non seulement l'identifiant objet mais également l'information actualisée relative à l'association préexistante qui pourra donc être envoyée automatiquement lors de la requête d'association. Bien entendu, si l'objet 4 est déjà associé avec un autre utilisateur, le code généré par l'objet peut également contenir l'identifiant de cet autre utilisateur. Par ailleurs, lorsque l'objet 4 est associé avec plusieurs autres utilisateurs, il est préférable que l'identifiant utilisateur contenu dans le code corresponde à un identifiant utilisateur ayant le statut d'utilisateur principal.

Quelle que soit la solution envisagée, si le résultat de la vérification d'une association préexistante est négatif, l'association de l'identifiant utilisateur avec l'identifiant objet est donc autorisé, et le serveur 1 met donc à jour la base données 2 (étape E) pour associer l'identifiant objet avec l'identifiant utilisateur.

Par contre, si le résultat de la vérification d'une association préexistante est positif, le serveur 1 envoie, dans l'exemple illustré par la figure 2, un signal de requête d'autorisation d'association à destination d'un terminal 6 associé à cet autre identifiant utilisateur. La communication entre le serveur 1 et le terminal 6 de cet autre utilisateur peut être conforme au premier protocole de communication ou être conforme à un autre protocole de communication.

Dans le cas illustré à la figure 1, le serveur 1 communique avec le terminal 6 de l'autre utilisateur via un deuxième protocole de communication différent du premier protocole de communication. Le serveur 1 distant est donc également affilié à un deuxième réseau de communication 8, compatible avec l'une des normes de communication existante, par exemple Wi-Fi®, et comprend donc également tous les moyens matériel et logiciel pour communiquer via ce deuxième protocole de communication.

A réception d'un signal d'autorisation d'association en provenance du terminal 6 de cet autre utilisateur, le serveur 1 réalise l'association de l'identifiant utilisateur avec l'identifiant objet par la mise à jour de la base de données 2 (étape E).

Une fois l'association réalisée dans la base de données 2, le serveur 1 envoie (étape F) un signal d'indication du succès de l'association requise, à destination du premier terminal 3 utilisateur.

Bien entendu, si l'autorisation d'association est négative, le serveur ne réalise pas l'appairage et envoie (étape G) un signal d'indication de l'échec d'association requise au premier terminal 3 de l'utilisateur ayant requis l'association.

Par ailleurs, suite au succès de l'association, le serveur 1 peut également envoyer un signal de configuration à destination de l'objet 4 contenant par exemple une commande de mise à jour de l'indicateur d'association et éventuellement l'identifiant utilisateur ayant le statut d'utilisateur principal correspondant.

Par la suite, l'objet 4 communique avec l'utilisateur auquel il est associé par l'intermédiaire du serveur 1 distant. Bien entendu, l'utilisateur peut utiliser le premier terminal 3 ou un deuxième terminal distinct du premier terminal pour communiquer avec le serveur, via le premier protocole de communication ou via un deuxième protocole de communication.

Par ailleurs, il est également aisé d'envisager le cas où le premier terminal utilisateur utilise un protocole de communication différent du premier protocole de communication sans fil pour communiquer avec le serveur.

Il ressort donc de ce qui précède que la solution proposée est une solution d'appairage entre un objet et un utilisateur, qui ne nécessite pas d'étapes de manipulation ou de configuration complexes de la part de l'utilisateur. En outre, la contrainte sur le nombre d'objets à appairer, sur le nombre d'utilisateurs à associer et sur la distance à respecter entre l'objet et le terminal n'existe plus. Grâce à l'invention, l'objet communicant peut être configuré pour ne tenir compte que des trames en provenance du serveur, ce qui permet d'éviter un traitement systématique par l'objet de toutes les trames parasites environnantes. Par ailleurs, l'utilisateur peut communiquer avec l'objet via le serveur en utilisant n'importe quel terminal, et ce même si le protocole de communication supporté par ce terminal est incompatible avec celui supporté par l'objet.

La solution de l'invention est particulièrement adaptée pour des objets communicants du type de ceux utilisés dans les applications M2M (Machine To Machine), ou de ceux qui permettent de former « l'Internet des Objets », et intégrant de préférence des moyens de communication sans fil bas débit compatibles avec la technologie UNB.

## Revendications

1. Procédé d'association d'un objet communicant (4) avec au moins un utilisateur, comprenant :
- la réception (C) par un serveur (1) distant d'un signal de requête d'association entre un identifiant de l'utilisateur dit « identifiant utilisateur » et un identifiant de l'objet dit « identifiant objet » ;
- la vérification (D) par le serveur (1) d'une autorisation d'association entre l'identifiant objet et l'identifiant utilisateur ;
- si l'association est autorisée, l'association (E) de l'identifiant objet avec l'identifiant utilisateur dans une base de données (2) accessible par le serveur (1) distant, ladite base de données (2) comprenant au moins une liste d'identifiants utilisateur et une liste d'identifiant objet ;
- la vérification (D) par le serveur (1) d'une autorisation d'association comprenant la vérification d'une association préexistante ou non de l'identifiant objet avec au moins un autre identifiant utilisateur, l'association de l'identifiant utilisateur avec l'identifiant objet étant autorisée si le résultat de la vérification d'une association préexistante est négatif ; **caractérisé en ce que**:
- si le résultat de la vérification d'une association préexistante est positif, la vérification (D) par le serveur (1) d'une autorisation d'association comprend l'envoi par le serveur (1) d'un signal de requête d'autorisation d'association à destination d'un terminal (6) associé audit autre identifiant utilisateur ;
- l'association de l'identifiant utilisateur avec l'identifiant objet étant autorisée à réception d'un signal d'autorisation consécutif audit signal de requête d'autorisation d'association.

2. Procédé selon la revendication 1, dans lequel un statut utilisateur principal ou secondaire est attribué à chaque identifiant utilisateur pour chaque identifiant objet auquel l'identifiant utilisateur est associé dans ladite base données, et dans lequel ladite requête d'autorisation d'association est envoyée audit autre utilisateur ayant le statut d'utilisateur principal.

3. Procédé selon la revendication 2, dans lequel le signal d'autorisation d'association en provenance dudit autre utilisateur contient en outre le statut à attribuer à l'identifiant utilisateur pour ledit objet.

4. Procédé selon l'une des revendications précédentes, dans lequel la vérification d'association préexistante comporte la recherche dans ladite base de données (2) si l'identifiant objet est associé à un autre identifiant utilisateur.

5. Procédé selon l'une des revendications précédentes, dans lequel la vérification d'association préexistante comporte :
- l'envoi d'un signal de requête d'état à l'objet via un protocole de communication sans fil ;
- la réception d'un signal d'état en provenance dudit objet consécutif à ladite requête d'état, ledit signal d'état contenant au moins un indicateur d'association préexistante.

6. Procédé selon la revendication 5, comprenant en outre l'envoi par le serveur (1) à destination de l'objet (4), selon le protocole de communication sans fil, d'un signal de configuration contenant au moins une commande de mise à jour de l'indicateur d'association, consécutivement à la réussite de l'association requise entre l'identifiant utilisateur et l'identifiant objet.

7. Procédé selon l'une des revendications 5 à 6, dans lequel le protocole de communication sans fil est bas débit.

8. Procédé selon la revendication 7, dans lequel le protocole de communication sans fil bas débit est compatible avec une technologie radio de bande ultra-étroite.

9. Procédé selon l'une des revendications précédentes, dans lequel un statut utilisateur principal ou secondaire est attribué à chaque identifiant utilisateur pour chaque identifiant objet auquel l'identifiant utilisateur est associé dans ladite base données.

10. Procédé selon l'une des revendications précédentes, dans lequel au moins un terminal de chaque utilisateur auquel ledit objet (4) est associé est référencé dans ladite base de données, ledit objet (4) pouvant communiquer avec ledit au moins un terminal de chaque utilisateur par l'intermédiaire dudit serveur (1) distant.

11. Dispositif d'association d'un objet (4) avec un utilisateur comprenant un serveur (1) distant ayant accès à une base de données (2), ladite base de données comprenant au moins une liste d'identifiants utilisateur et une liste d'identifiants objet, ledit serveur (1) étant apte à communiquer avec ledit objet (4) distant et avec au moins un terminal (3) distant de chaque utilisateur auquel ledit objet (4) est associé, ledit objet (4) pouvant communiquer avec ledit au moins un terminal de chaque utilisateur par l'intermédiaire dudit serveur (1), ledit serveur étant en outre apte à mettre en œuvre les étapes correspondantes du procédé d'association selon l'une des revendications 1 à 10.

12. Système de communication comprenant :
- un objet (4) communicant intégrant un module de communication selon un premier protocole de communication, ledit objet étant identifié par un identifiant objet unique,
- un terminal (3) utilisateur couplé à un module de communication selon un deuxième protocole de communication, et
- un dispositif d'association selon la revendication 11,
ledit objet (4) pouvant communiquer avec ledit terminal (3) utilisateur par l'intermédiaire du serveur (1) du dispositif d'association.

13. Système de communication selon la revendication 12, dans lequel le premier protocole de communication est compatible avec une technologie radio de bande ultra-étroite.

14. Produit programme d'ordinateur téléchargeable depuis un réseau de communication et/ou enregistré sur un support lisible par ordinateur et/ou exécutable par un processeur, comprenant des instructions de code de programme pour la mise en œuvre d'un procédé d'association selon l'une des revendications 1 à 10.

## Patentansprüche

1. Verfahren zum Zuordnen eines kommunizierenden Objekts (4) mit mindestens einem Benutzer, Folgendes umfassend:
- Empfangen (C) durch einen entfernten Server (1) eines Zuordnungsanfragesignals zwischen einer "Benutzerkennung" genannten Kennung des Benutzers und einer "Objektkennung" genannten Kennung des Objekts;
- Überprüfen (D) durch den Server (1) einer Zuordnungsgenehmigung zwischen der Objektkennung und der Benutzerkennung;
- falls die Zuordnung genehmigt ist, Zuordnen (E) der Objektkennung mit der Benutzerkennung in einer durch den entfernten Server (1) zugänglichen Datenbank (2), wobei die Datenbank (2) mindestens eine Benutzerkennungsliste und eine Objektkennungsliste umfasst;
- Überprüfen (D) durch den Server (1) einer Zuordnungsgenehmigung, umfassend die Überprüfung einer bestehenden Zuordnung oder nicht der Objektkennung mit mindestens einer anderen Benutzerkennung, wobei die Zuordnung der Benutzerkennung mit der Objektkennung genehmigt wird, falls das Ergebnis der Überprüfung einer bestehenden Zuordnung negativ ist; **dadurch gekennzeichnet, dass**:
- falls das Resultat der Überprüfung einer bestehenden Zuordnung positiv ist, die Überprüfung (D) einer Zuordnungsgenehmigung durch den Server (1) das Senden durch den Server (1) eines Zuordnungsgenehmigungsanfragesignals zu einem Endgerät (6) umfasst, das der anderen Benutzerkennung zugeordnet ist;
- wobei das Zuordnen der Benutzerkennung mit der Objektkennung bei Empfang eines Genehmigungssignals im Anschluss an das Zuordnungsgenehmigungsanfragesignal genehmigt wird.

2. Verfahren nach Anspruch 1, wobei jeder Benutzerkennung für jede Objektkennung, der die Benutzerkennung in der Datenbank zugeordnet wird, ein Haupt- oder Sekundärbenutzerstatus zugewiesen wird, und wobei die Zuordnungsgenehmigungsanfrage zu dem anderen Benutzer gesendet wird, der den Hauptbenutzerstatus aufweist.

3. Verfahren nach Anspruch 2, wobei das Zuordnungsgenehmigungssignal von dem anderen Benutzer weiter den Status enthält, der der Benutzerkennung für das Objekt zuzuweisen ist.

4. Verfahren nach einem der vorstehenden Ansprüche, wobei die Überprüfung einer bestehenden Zuordnung die Suche in der Datenbank (2) beinhaltet, falls die Objektkennung einer anderen Benutzerkennung zugeordnet ist.

5. Verfahren nach einem der vorstehenden Ansprüche, wobei die Überprüfung einer bestehenden Zuordnung Folgendes beinhaltet:
- das Senden eines Statusanfragesignals zu dem Objekt über ein drahtloses Kommunikationsprotokoll;
- das Empfangen eines Statussignals von dem Objekt im Anschluss an die Statusanfrage, wobei das Statussignal mindestens einen Indikator einer bestehenden Zuordnung enthält.

6. Verfahren nach Anspruch 5, weiter das Senden durch den Server (1) zu dem Objekt (4), gemäß dem drahtlosen Kommunikationsprotokoll, eines Konfigurationssignals umfassend, das mindestens einen Befehl zum Aktualisieren des Zuordnungsindikators im Anschluss an die nötige erfolgreiche Zuordnung zwischen der Benutzerkennung und der Objektkennung enthält.

7. Verfahren nach einem der Ansprüche 5 bis 6, wobei das drahtlose Kommunikationsprotokoll mit niedrigem Datendurchsatz ist.

8. Verfahren nach Anspruch 7, wobei das drahtlose Kommunikationsprotokoll mit niedrigem Datendurchsatz mit einer Ultraschmalband-Funktechnologie kompatibel ist.

9. Verfahren nach einem der vorstehenden Ansprüche, wobei ein Haupt- und Sekundärbenutzerstatus jeder Benutzerkennung für jede Objektkennung zugewiesen ist, der die Benutzerkennung in der Datenbank zugeordnet ist.

10. Verfahren nach einem der vorstehenden Ansprüche, wobei mindestens ein Endgerät jedes Benutzers dem das Objekt (4) zugeordnet ist, in der Datenbank referenziert ist, wobei das Objekt (4) mit dem mindestens einen Endgerät jedes Benutzers über den entfernten Server (1) kommunizieren kann.

11. Vorrichtung zum Zuordnen eines Objekts (4) mit einem Benutzer, umfassend einen entfernten Server (1), der Zugang zu einer Datenbank (2) aufweist, wobei die Datenbank mindestens eine Benutzerkennungsliste und eine Objektkennungsliste umfasst, wobei der Server (1) imstande ist, mit dem entfernten Objekt (4) und mit mindestens einem entfernten Endgerät (3) jedes Benutzers zu kommunizieren, dem das Objekt (4) zugeordnet ist, wobei das Objekt (4) mit dem mindestens einen Endgerät jedes Benutzers über den Server (1) kommunizieren kann, wobei der Server weiter imstande ist, die entsprechenden Schritte des Verfahrens zum Zuordnen nach einem der Ansprüche 1 bis 10 umzusetzen.

12. Kommunikationssystem, Folgendes umfassend:
- ein kommunizierendes Objekt (4), das in einem Kommunikationsmodul gemäß einem ersten Kommunikationsprotokoll aufgenommen ist, wobei das Objekt durch eine eindeutige Objektkennung erkannt wird,
- ein Benutzerendgerät (3), das gemäß einem zweiten Kommunikationsprotokoll an ein Kommunikationsmodul gekoppelt ist, und
- eine Vorrichtung zum Zuordnen nach Anspruch 11,
wobei das Objekt (4) über den Server (1) der Vorrichtung zum Zuordnen mit dem Benutzerendgerät (3) kommunizieren kann.

13. Kommunikationssystem nach Anspruch 12, wobei das erste Kommunikationsprotokoll mit einer Ultraschmalband-Funktechnologie kompatibel ist.

14. Computerprogrammprodukt, das aus einem Kommunikationsnetzwerk heruntergeladen, und/oder auf einem vom Computer lesbaren Medium gespeichert, und/oder durch einen Prozessor ausgeführt werden kann, umfassend Programmcodeanweisungen zur Umsetzung eines Verfahrens zum Zuordnen nach einem der Ansprüche 1 bis 10.

## Claims

1. Method for associating a communicating object (4) with at least one user, comprising:
- a remote server (1) receiving (C) an association request signal between an identifier of the user called "user identifier" and an identifier of the object called "object identifier";
- the server (1) verifying (D) an association authorisation between the object identifier and the user identifier;
- if the association is authorised, associating (E) the object identifier with the user identifier in a database (2) accessible by the remote server (1), said database (2) comprising at least one list of user identifiers and one list of object identifiers;
- the server (1) verifying (D) an association authorisation comprising verifying a pre-existing association of the object identifier with at least one other user identifier, associating the user identifier with the object identifier being authorised if the result of verifying a pre-existing association is negative; **characterised in that**:
- if the result of verifying a pre-existing association is positive, the server (1) verifying (D) an association authorisation comprises the server (1) sending an association authorisation request signal to a terminal (6) associated with said other user identifier;
- associating the user identifier with the object identifier being authorised upon receiving an authorisation signal subsequent to said association authorisation request signal.

2. Method according to claim 1, wherein a main or secondary user status is allocated to each user identifier for each object identifier to which the user identifier is associated in said database, and wherein said association authorisation request is sent to said other user having the main user status.

3. Method according to claim 2, wherein the association authorisation signal from said other user furthermore contains the status to be allocated to the user identifier for said object.

4. Method according to one of the preceding claims, wherein verifying the pre-existing association comprises searching in said database (2) whether the object identifier is associated with another user identifier.

5. Method according to one of the preceding claims, wherein verifying the pre-existing association comprises:
- sending a status request signal to the object via a wireless communication protocol;
- receiving a status signal from said object subsequent to said status request, said status signal containing at least one pre-existing association indicator.

6. Method according to claim 5, further comprising the server (1) sending to the object (4), according to the wireless communication protocol, a configuration signal containing at least one command for updating the association indicator, subsequently to the success of the association required between the user identifier and the object identifier.

7. Method according to one of claims 5 to 6, wherein the wireless communication protocol is low speed.

8. Method according to claim 7, wherein the low speed wireless communication protocol is compatible with an ultranarrow band radio technology.

9. Method according to one of the preceding claims, wherein a main or secondary user status is allocated to each user identifier for each object identifier to which the user identifier is associated in said database.

10. Method according to one of the preceding claims, wherein at least one terminal of each user to which said object (4) is associated is referenced in said database, said object (4) being able to communicate with said at least one terminal of each user through said remote server (1).

11. Device for associating an object (4) with a user comprising a remote server (1) having access to a database (2), said database comprising at least one list of user identifiers and one list of object identifiers, said server (1) being capable of communicating with said remote object (4) and with at least one remote terminal (3) of each user to which said object (4) is associated, said object (4) being able to communicate with said at least one terminal of each user through said server (1), said server being furthermore capable of implementing the corresponding steps of the association method according to one of claims 1 to 10.

12. Communication system comprising:
- a communicating object (4) including a communication module according to a first communication protocol, said object being identified by a unique object identifier,
- a user terminal (3) coupled with a communication module according to a second communication protocol, and
- an association device according to claim 11,
said object (4) being able to communicate with said user terminal (3) through the server (1) of the association device.

13. Communication system according to claim 12, wherein the first communication protocol is compatible with an ultranarrow band radio technology.

14. Computer program product downloadable from a communication network and/or recorded on a computerreadable medium and/or executable by a processor, comprising program code instructions for implementing an association method according to one of claims 1 to 10.
